# EUROPÄISCHE PATENTANMELDUNG

(11) **EP 4 549 054 A1**
(43) Veröffentlichungstag der Anmeldung: **07.05.2025**
(21) Anmeldenummer: 24210247.3
(22) Anmeldetag: 31.10.2024
(51) Int. Cl.: B22F 1/05, B22F 10/28, B22F 10/364, B22F 10/366, B22F 10/38, B22F 10/62, B22F 10/64, B22F 10/66, B22F 12/82, B33Y 10/00, B33Y 30/00, B33Y 40/20, B33Y 50/02, B67C 3/02, B67C 3/04, C25F 3/16, C25F 3/24, B22F 5/10, B67C 3/26

(54) **ADDITIVE FERTIGUNG EINES BAUTEILS IN DER LEBENSMITTELINDUSTRIE**

(30) Priorität: 31.10.2023 DE 102023130184
(71) Anmelder: KRONES AG, 93073 Neutraubling (DE)
(72) Erfinder: Neuber, Andreas, 93073 Neutraubling (DE); Schindler, Florian, 93073 Neutraubling (DE); Wimmer, Jakob, 93073 Neutraubling (DE)
(74) Vertreter: Nordmeyer, Philipp Werner

(57) **Zusammenfassung**

Verfahren und System zur additiven Fertigung eines Bauteils (116), insbesondere eines Bauteils (116) zur Verwendung mit Lebensmitteln, mittels einer additiven Fertigungsvorrichtung (110), die einen Herstellungsabschnitt (130) und ein Strahlschmelzsystem (140) aufweist, wobei das Verfahren aufweist: Herstellen einer Bearbeitungsschicht (114) aus einem Pulvermaterial (112), das vorzugsweise ein metallisches Pulver ist, in dem Herstellungsabschnitt (130) der additiven Fertigungsvorrichtung (110); Belichten der Bearbeitungsschicht (114) mittels des Strahlschmelzsystems (140), wodurch das Pulvermaterial (112) in der Bearbeitungsschicht (114) lokal aufgeschmolzen wird, wobei das Strahlschmelzsystem (140) die Bearbeitungsschicht (114) hierbei so abfährt und belichtet, dass unter Anwendung von Hatch-Prozessparametern zumindest ein Hatchbereich (117) und unter Anwendung von Kontur-Prozessparametern zumindest ein Konturbereich (118) des additiv zu fertigenden Bauteils (116) ausgebildet werden; wobei in dem zumindest einen Konturbereich (118) mehrere nebeneinanderliegende Konturlinien (118a) erzeugt werden und/oder der zumindest eine Konturbereich (118) zumindest teilweise mehrfach belichtet wird.

## Beschreibung

### Technisches Gebiet

Die vorliegende Erfindung betrifft ein Verfahren, ein System und eine Anordnung zur Fertigung eines Bauteils, insbesondere eines Bauteils zur Verwendung mit Lebensmitteln, umfassend einen Prozess der additiven Fertigung.

### Stand der Technik

In der Fluidabfüllung im Lebensmittelbereich sind Füllventile unterschiedlicher Bauart und Herstellungsverfahren bekannt. Sind komplexe Geometrien, insbesondere komplexe Kanalstrukturen im Inneren des Füllventils zu realisieren ("bionische", "organische" Gestalt), kommen additive Fertigungskonzepte, auch als "3D-Druck" oder "generative Fertigung" bezeichnet, in Betracht.

Aus der DE 10 2020 129 102 A1 ist ein additiv gefertigtes Kombifüllventil zur Abfüllung von stillen und karbonisierten Produkten bekannt.

Die additive Fertigung hat aufgrund der Herstellbarkeit komplexer Geometrien den Vorteil, dass das Strömungsverhalten und Leerlaufverhalten des Fluids optimierbar sind, Toträume eliminiert und Dichtstellen vermieden werden können, wodurch die Füllventile besser zu reinigen sind, eine besonders hygienische Gestaltung aufweisen sowie eine produktschonende Abfüllung erlauben.

Die Bauteile können mit unterschiedlichen additiven Verfahren gefertigt werden, beispielsweise mittels SLM ("Selective Laser Melting"), EBM ("Electron Beam Melting"), LENS ("Laser Engineering Net Shape"), MPA ("Metal Powder Application"), WAAM ("Wire Arc Additive Manufacturing"), FDM ("Fused Deposition Modeling"), BJ ("Binder Jetting") oder NPJ ("Nano Particle Jetting").

Eine Schwierigkeit bei der additiven Fertigung besteht in der Sicherstellung einer ausreichend hohen Oberflächenqualität, die insbesondere im Lebensmittelbereich unerlässlich ist. Für produktberührte Bauteile wird bei der hygienischen Abfüllung von Getränken eine Oberflächenrauheit von Ra ≤ 0,8 µm angestrebt. Ra steht hierbei für den Mittenrauwert als standardisiertes Maß für die Rauheit einer Oberfläche. Darüber hinaus können bei der additiven Fertigung Fehlstellen (Poren, Lunker, Risse usw.) im Material entstehen, beispielsweise durch Gaseinschlüsse, Bindungsfehler oder Delamination. Somit ist zumeist eine Nachbearbeitung des additiv gefertigten Bauteils, insbesondere der mit dem Produkt in Berührung kommenden Oberflächen, erforderlich.

Es sind ferner hybride Verfahren bekannt, bei denen ein schichtweiser additiver Aufbau und eine sequenziell nachgeschaltete spanende Nachbearbeitung kombiniert werden. Solche Verfahren kommen jedoch in der Regel nicht ohne Nachbearbeitung aus, da durch den Werkzeugwechsel zwischen additivem Aufbau und spanender Nachbearbeitung, insbesondere bei komplexen Geometrien (beispielsweise Drallgeometrien, Kanälen mit starken Änderungen der Krümmungsradien usw.), Werkzeugwechselkanten, die sich in Form von Treppenstufen im Material äußern, entstehen können.

Gut zugängliche Bauteilflächen und -kanten können mittels konventioneller Methoden wie dem klassischen Elektropolieren, Gleitschleifen, einer spanenden Nachbearbeitung (Drehen, Bohren, Fräsen usw.) verbessert werden. Komponenten mit Kanälen und anderen innenliegenden Konturen, die teils hinterschnittig und von außen schwer zugänglich sind, jedoch direkten oder indirekten Kontakt mit Lebensmitteln haben, können mit diesen Verfahren nicht nachbearbeitet werden. Es sind jedoch Technologien entwickelt worden, die dieses Problem aufgreifen, so etwa das Strömungsschleifen, Hirtisieren, MMP ("Micro Machining Process") DLyte und HIP ("Heißisostatisches Pressen").

Beim Strömungsschleifen wird eine Paste ("flüssige Feile") oszillierend durch die zu bearbeitenden Kanäle gepumpt. Das Hirtisieren beruht auf der Anwendung flüssiger Bearbeitungsmedien und kinetisch kontrollierter Elektrochemie. Mit MMP wird ein mechanisch physikalisch chemisches Spezialverfahren bezeichnet, bei dem das Bauteil in ein Bad mit Flüssigkeit und Micro Tools getaucht wird, welche hochenergetisch angeregt werden und so die Rauheit abtragen. DLyte ist eine trockene Oberflächenbearbeitung zum Schleifen und Polieren von Metallen durch lonentransport mit freien Festkörpern, wobei ein Stromfluss mit der Bewegung der Teile durch das Elektropoliermedium kombiniert wird. Beim HIP wird das Bauteil unter hohem Druck und hoher Temperatur verdichtet, was zu einer Steigerung der relativen Dichte und Verringerung der Porosität führt.

Die Oberflächenqualität, die mit derartigen Nachbearbeitungsverfahren erreicht werden kann, ist signifikant abhängig von der Ausgangsrauheit, d.h. der vorliegenden Rauheit unmittelbar nach der additiven Fertigung, sowie von der Gefügequalität im oberflächennahen Bereich. Man spricht hierbei auch von der "As-built-Oberfläche", welche die Oberfläche direkt nach der additiven Fertigung bezeichnet.

Unabhängig davon, wie der additive Aufbau erfolgt (etwa mittels Pulver, Draht, Filament usw.), können sich Fehlstellen im Gefüge bilden. Beispielsweise kann es beim Aufschmelzen von Pulverpartikeln durch den Energieeintrag der Energiequelle (beispielsweise Laserstrahl oder Elektronenstrahl) als auch durch Fremdstoffe in der Interaktionszone zu Verunreinigungen, Poren, Lunkern, Bindungsfehlern usw. kommen. Ein erhöhtes Porenaufkommen ist speziell im Randbereich, d.h. im Übergang zwischen einer Kontur und dem Innern des durch die Kontur definierten Körpers bzw. Abschnitts, dem sogenannten "Hatch", festzustellen. Hatch und Kontur werden für einen guten Kompromiss aus Wirtschaftlichkeit und Qualität üblicherweise mit unterschiedlichen Prozessparametern ausgeführt: schnelles Hatchen und langsameres Konturscannen.

Durch eine materialabtragende Nachbearbeitung können die beim Aufschmelzen entstandenen Poren freigelegt werden, wodurch sich die Oberflächenqualität bei einer auf die additive Fertigung folgenden Oberflächenbehandlung kontraintuitiv wieder verschlechtern kann. Hierbei haben die oben genannten Nachbearbeitungsverfahren spezifische Nachteile. So ist es beim Hirtisieren und bei MMP zumindest im Fall bestimmter Geometrien (beispielsweise Kanäle mit kleinen Durchmessern) schwierig, die gewünschte Oberflächengüte von Ra ≤ 0,8 µm zu erzielen. Beim Strömungsschleifen können aufgrund des Materialabtrags die oben beschriebenen Fehlstellen (Poren) im Material, speziell im randnahen Bereich, freigelegt werden. Zudem kann bei Kanälen, deren Querschnitte und Krümmungen über den Kanalverlauf nicht konstant sind, ein inhomogener Materialabtrag erfolgen, woraus Oberflächen ungleichmäßiger Güte resultieren. Die Anwendbarkeit des DLyte Verfahrens ist ebenfalls durch die Kanalgröße die Kanalgeometrie begrenzt.

### Darstellung der Erfindung

Eine Aufgabe der Erfindung besteht darin, die additive Fertigung eines Bauteils, vorzugsweise zur Verwendung mit Lebensmitteln, zu verbessern, insbesondere die hygienischen Eigenschaften und die Güte innenliegender, mit einem (flüssigen) Produkt in Berührung kommender Oberflächen des Bauteils zu verbessern.

Die Aufgabe wird durch ein Verfahren mit den Merkmalen des Anspruchs 1, ein Verfahren mit den Merkmalen des Anspruchs 5, ein System mit den Merkmalen des Anspruchs 10 sowie eine Anordnung mit den Merkmalen des Anspruchs 14 gelöst. Vorteilhafte Weiterbildungen folgen aus den Unteransprüchen, der folgenden Darstellung der Erfindung sowie der Beschreibung bevorzugter Ausführungsbeispiele.

Das Verfahren gemäß der Erfindung dient zur additiven Fertigung eines Bauteils, insbesondere eines Bauteils zur Verwendung mit Lebensmitteln. Generell können additiv gefertigte Bauteile, die mit direktem oder sekundärem Lebensmittelkontakt insbesondere in Abfüll- und/oder Verpackungsanlagen zum Einsatz kommen, durch das Verfahren hergestellt werden. Dazu zählen insbesondere Komponenten von Füllorganen in Getränkeabfüllanlagen, vorzugsweise Gehäuseteile mit Produktleitungen bzw. Kanälen komplexer Geometrien. Allerdings ist das hier dargelegte Fertigungskonzept darauf nicht beschränkt.

Das Verfahren wird mittels einer additiven Fertigungsvorrichtung durchgeführt, die einen Herstellungsabschnitt und ein Strahlschmelzsystem aufweist.

Zunächst wird in dem Herstellungsabschnitt der additiven Fertigungsvorrichtung eine Bearbeitungsschicht aus einem Pulvermaterial hergestellt. Als Werkstoff für das Pulvermaterial kommen verschiedene Metalle in Betracht, insbesondere Edelstahl, vorzugsweise Edelstahl 316L, wobei andere Metalle und Legierungen möglich sind, wie etwa Titan oder Aluminium.

Anschließend wird die Bearbeitungsschicht mittels des Strahlschmelzsystems belichtet, wodurch das Pulvermaterial in der Bearbeitungsschicht lokal aufgeschmolzen wird, wobei das Strahlschmelzsystem die Bearbeitungsschicht hierbei so abfährt und belichtet, dass unter Anwendung von Hatch-Prozessparametern zumindest ein Hatchbereich und unter Anwendung von Kontur-Prozessparametern zumindest ein Konturbereich des additiv zu fertigenden Bauteils ausgebildet werden.

Unter einem Konturbereich wird ein Bereich des additiv zu fertigenden Bauteils verstanden, welcher im Bereich einer Oberfläche des Bauteils ausgebildet ist. Die Oberfläche ist üblicherweise Teil des Konturbereichs, aber dieser erstreckt sich auch noch weiter in das Volumen des Bauteils hinein. Mit anderen Worten wird unter einem Konturbereich ein oberflächennaher Bereich oder ein Randbereich des Bauteils verstanden. Hierin wird hier der Einfachheit halber immer nur von einem Konturbereich oder einer Kontur gesprochen - gemeint ist damit immer ein solcher oberflächennaher Bereich.

Unter dem Hatchbereich wird ein Bereich des additiv zu fertigenden Bauteils verstanden, in dem eine zügige Fertigung bei einem schnellen Volumenauftrag des Materials erreicht werden soll. Dies sind üblicherweise Bereiche im Volumen des Bauteils. Der Hatchbereich kann von einem Konturbereich umgeben sein, welcher dann die eigentliche Oberfäche des Bauteils ausbildet.

Das Strahlschmelzverfahren wird somit durch verschiedene Prozessparameter konfiguriert, umfassend beispielsweise Laserleistung oder Elektronenstrahlleistung, Scangeschwindigkeit, Spurabstand des Strahlschmelzsystems und/oder die vom Herstellungsabschnitt herzustellende Schichtdicke der Bearbeitungsschicht. Die für den Hatchbereich angewendeten Prozessparameter seien hierin als "Hatch-Prozessparameter" bezeichnet, und die für den Konturbereich angewendeten Prozessparameter seien als "Kontur-Prozessparameter" bezeichnet. Eine Steuereinrichtung kann die Prozessparameter bereitstellen und die additive Fertigungsvorrichtung entsprechend steuern und/oder regeln.

Der Hatchbereich und der Konturbereich werden für einen guten Kompromiss aus Wirtschaftlichkeit und Qualität vorzugsweise mit unterschiedlichen Prozessparametern ausgeführt, d.h. die Hatch-Prozessparameter und die Kontur-Prozessparameter unterscheiden sich vorzugsweise zumindest teilweise. Insbesondere kann der Hatchbereich mit einer höheren Scangeschwindigkeit als der Konturbereich gescannt bzw. belichtet werden. Allerdings können alternative oder zusätzliche Prozessparameter, beispielsweise Laserleistung bzw. Elektronenstrahlleistung und/oder Spurabstand, modifiziert werden, um den Konturbereich vom Hatchbereich prozesstechnisch zu unterscheiden.

Gemäß der Erfindung werden in dem zumindest einen Konturbereich mehrere nebeneinanderliegende Konturlinien erzeugt. Alternativ oder zusätzlich wird der Konturbereich zumindest teilweise mehrfach belichtet.

Die Erzeugung der mehreren Konturlinien und/oder die Mehrfachbelichtung beziehen sich hierbei auf einen Belichtungsvorgang der aktuellen Bearbeitungsschicht. Üblicherweise werden die Schritte des Herstellens und Belichtens der Bearbeitungsschicht in einem sequentiellen Prozess mehrfach durchlaufen, wodurch das additiv herzustellende Bauteil Schicht für Schicht aufgebaut wird.

Durch die Erzeugung mehrerer Konturlinien im Konturbereich und/oder die Mehrfachbelichtung des Konturbereichs wird der unstetige Übergangsbereich zwischen Hatchbereich und Konturbereich ins Bauteilinnere verlegt, wodurch eine Verbesserung der Oberflächengüte erzielbar ist. Die Verbesserung kann hierbei eine unmittelbare Reduzierung der Porosität (Anzahl und Größe der Poren) im Bauteil umfassen. Der Konturbereich kann durch das Erzeugen mehrerer nebeneinanderliegender Konturlinien auch mit einer größeren Dicke ausgebildet werden. Mit anderen Worten wird auf diese Weise ein dickerer Oberflächenbereich ausgebildet.

Durch eine etwaige nachgeschaltete abrasive Nachbearbeitung werden wegen der Verbesserung der Oberflächengüte und/oder die größere Dicke des Konturbereichs zudem keine Poren mehr freigelegt, wodurch insgesamt eine Reduktion der Oberflächenrauheit realisierbar ist. Die verbesserte As-built-Oberflächengüte, sofern sie den hygienischen Anforderungen noch nicht entspricht, stellt eine für die Nachbearbeitung verbesserte Ausgangsrauheit dar. So wird bei einer etwaigen Nachbearbeitung des Bauteils die Gefahr reduziert, dass der Konturbereich abschnittsweise komplett beseitigt wird und der Hatchbereich mit üblicherweise geringerer Qualität als produktberührte Fläche freiliegt. Ferner werden Bindungsfehler in den Zwischenbereichen durch eine etwaige Mehrfachbelichtung eliminiert. Insgesamt ist damit eine Reduktion der Porenanzahl und -größe im randnahen Bereich, d.h. in den produktberührten Flächen des Bauteils, realisierbar.

Auf diese Weise lassen sich hygienische, innenliegende Oberflächen mit einer Rauheit von Ra ≤ 0,8 µm realisieren, sogar Hochglanzoberflächen, insbesondere unter Anwendung des MMP-Verfahrens, von Ra < 0,2 µm. Damit wird die Gefahr mikrobieller Verunreinigungen des Bauteils reduziert, und das Bauteil ist einfacher und zuverlässiger zu reinigen.

Werden in dem zumindest einen Konturbereich mehrere nebeneinanderliegende Konturlinien erzeugt, so findet vorzugsweise eine erneute Belichtung von Zwischenräumen der Konturlinien statt, insbesondere mit gegenüber den Konturlinien veränderten Prozessparametern. Auf diese Weise kann die Güte des Konturbereichs weiter verbessert werden.

In einer Weiterbildung können die Konturlinien derart angeordnet werden, dass eine Überlappung zwischen den Konturlinien entsteht. In einer Weiterbildung kann auch eine Überlappung zwischen den Konturlinien und dem Hatchbereich erreicht werden.

Die Prozessparameter der Konturlinien sind bevorzugt so optimiert, dass die Porosität im Konturbereich, also im Oberflächenbereich minimiert ist.

Vorzugsweise wird der zumindest eine Hatchbereich unter Anwendung der Kontur-Prozessparameter belichtet, wodurch ein etwaiges erhöhtes Porenaufkommen im Übergangsbereich zwischen Hatchbereich und Konturbereich eliminiert wird und somit ein im Wesentlichen porenfreies oberflächennahes Gefüge generierbar ist.

Eine zusätzliche Maßnahme zur Verbesserung der Oberflächengüte produktberührter Flächen des Bauteils liegt in der Verwendung einer besonders dünnen Bearbeitungsschicht in Kombination mit einem feinen Pulvermaterial. Vorzugsweise wird zu diesem Zweck ein Pulvermaterial mit einer Partikelgröße von maximal 20 µm, insbesondere weniger als 15 µm, in Kombination mit einer Schichtdicke der Bearbeitungsschicht von maximal 20 µm, insbesondere weniger als 15 µm, angewendet. Besonders bevorzugt ist die Schichtdicke der Bearbeitungsschicht größer als die Partikelgröße des Pulvermaterials.

Diese Maßnahme kann auch alleinstehend herangezogen werden. Somit wird die oben genannte Aufgabe ferner durch ein Verfahren zur additiven Fertigung eines Bauteils, insbesondere eines Bauteils zur Verwendung mit Lebensmitteln, mittels einer additiven Fertigungsvorrichtung, die einen Herstellungsabschnitt und ein Strahlschmelzsystem aufweist, gelöst, wobei das Verfahren aufweist: Herstellen einer Bearbeitungsschicht aus einem Pulvermaterial in dem Herstellungsabschnitt der additiven Fertigungsvorrichtung; Belichten der Bearbeitungsschicht mittels des Strahlschmelzsystems, wodurch das Pulvermaterial in der Bearbeitungsschicht lokal aufgeschmolzen wird; wobei als Pulvermaterial ein feines Pulver mit einer Partikelgröße von maximal 20 µm, vorzugsweise weniger als 15 µm, in Kombination mit einer Schichtdicke der Bearbeitungsschicht von maximal 20 µm, vorzugsweise weniger als 15 µm, angewendet wird, wobei die Schichtdicke der Bearbeitungsschicht vorzugsweise größer als die Partikelgröße des Pulvermaterials ist.

Vorzugsweise findet im Anschluss an die Belichtung der Bearbeitungsschicht eine subtraktive Bearbeitung des Konturbereichs mittels einer Abtragungsvorrichtung, umfassend beispielsweise eine Fräse, statt. Das additive Fertigungsverfahren beruht in diesem Fall auf einem Hybridverfahren, bei dem ein schichtweiser additiver Aufbau und eine sequenziell nachgeschaltete subtraktive Nachbearbeitung kombiniert werden. In anderen Worten, nach einer individuell definierten Anzahl an additiv aufgebauten Schichten in der additiven Fertigungsvorrichtung erfolgt ein Werkzeugwechsel hin zur Abtragungsvorrichtung, vorzugsweise zu einem Fräskopf. Dieser bearbeitet dann die bis dahin erzeugte Geometrie mechanisch nach. Dieser Prozess wird so lange iteriert, bis das Bauteil vollständig aufgebaut ist. Durch Anwendung eines solchen Hybridverfahrens kann die Oberflächengüte des Bauteils weiter verbessert werden.

Bei einem solchen Hybridverfahren können durch die subtraktive Bearbeitung während der additiven Fertigung Kanten oder andere Oberflächenfehler am Bauteil entstehen. Diese können durch eine Optimierung der Schneidengeometrie der Abtragungsvorrichtung minimiert werden, beispielsweise durch Verwendung einer Schneide mit abgerundeten Kanten anstelle einer spitzen Schneide. Alternativ oder zusätzlich kann eine simulationsgestützte Verzugskompensation durchgeführt werden, um Verzügen entgegenzuwirken, die beispielsweise durch thermisch induzierte Eigenspannungen während des additiven Aufbauprozesses sowie durch das Lösen von Eigenspannungen bei der subtraktiven Nachbearbeitung hervorgerufen werden.

Die oben genannte Aufgabe wird ferner durch ein Verfahren zur Fertigung eines Bauteils, insbesondere eines Bauteils zur Verwendung mit Lebensmitteln, gelöst, wobei das Verfahren aufweist: additives Fertigen des Bauteils mittels einer additiven Fertigungsvorrichtung, wobei die additive Fertigung vorzugsweise nach einem der vorstehend beschriebenen Ausführungsvarianten erfolgt; und Nachbearbeiten von Oberflächen des Bauteils mittels eines oder mehrerer Nachbearbeitungsverfahren, umfassend vorzugsweise das Strömungsschleifen und/oder Hirtisieren und/oder MMP und/oder DLyte und/oder HIP.

Die additive Fertigung des Bauteils kann mittels eines oben beschriebenen Hybridverfahrens erfolgen. Durch Kombination eines solchen Hybridverfahrens mit einer Nachbearbeitung können Pulverrückstände, Schweißspritzer und Werkzeugwechselkanten beseitigt bzw. homogenisiert werden, wobei vorzugsweise ein hybrides DED-Verfahren oder ein hybrides SLM-Verfahren mi einem Nachbearbeitungsverfahren, beispielsweise Strömungsschleifen oder Hirtisieren, kombiniert werden.

Vorzugsweise werden zur Nachbearbeitung eines additiv hergestellten Bauteils nach den oben genannten Beschreibungen zumindest zwei Nachbearbeitungsverfahren kombiniert, die zwei nachgelagerte Bearbeitungsschritte an dem Bauteil vornehmen. Beispielsweise kann die Nachbearbeitung eine Grobbearbeitung umfassen, bei der ein grober Materialabtrag erfolgt, und eine Feinbearbeitung nach der Grobbearbeitung, welche die finale Oberfläche erzeugt, umfasst. Besonders bevorzugt werden als Nachbearbeitungsverfahren das Strömungsschleifen und ein MMP-Prozess oder das Hirtisieren oder das DLyte-Verfahren kombiniert. Die Reihenfolge der Anwendung der Nachbearbeitungsverfahren kann abhängig von der jeweiligen Anwendung und/oder dem additiven Material und/oder der Bauteilgeometrie gewählt werden. Beispielsweise kann das Strömungsschleifen für eine Grobbearbeitung und ein MMP-Prozess oder das Hirtisieren oder das DLyte-Verfahren für die Feinbearbeitung verwendet werden. Je nach Anforderung kann die Reihenfolge aber auch umgekehrt werden. Auf diese Weise lässt sich die Oberflächengüte des Bauteils weiter verbessern.

Die oben genannte Aufgabe wird ferner durch ein System zur additiven Fertigung eines Bauteils, insbesondere eines Bauteils zur Verwendung mit Lebensmitteln, gelöst, wobei das System aufweist: eine additive Fertigungsvorrichtung, umfassend einen Herstellungsabschnitt zum Herstellen einer Bearbeitungsschicht aus einem Pulvermaterial, das vorzugsweise ein metallisches Pulver ist, und ein Strahlschmelzsystem zum Belichten der Bearbeitungsschicht, wodurch das Pulvermaterial in der Bearbeitungsschicht lokal aufschmelzbar ist; und eine Steuereinrichtung, die mit der additiven Fertigungsvorrichtung in Kommunikation steht und eingerichtet ist, um das Strahlschmelzsystem zu veranlassen, die Bearbeitungsschicht so abzufahren und zu belichten, dass unter Anwendung von Hatch-Prozessparametern zumindest ein Hatchbereich und unter Anwendung von Kontur-Prozessparametern zumindest ein Konturbereich des additiv zu fertigenden Bauteils ausgebildet werden; wobei die Steuereinrichtung ferner eingerichtet ist, um das Strahlschmelzsystem zu veranlassen, in dem zumindest einen Konturbereich mehrere nebeneinanderliegende Konturlinien zu erzeugen und/oder den zumindest einen Konturbereich zumindest teilweise mehrfach zu belichten.

Die Merkmale, technischen Wirkungen, Vorteile sowie Ausführungsbeispiele, die in Bezug auf die Verfahren beschrieben wurden, gelten analog für das System.

Das Fertigungsverfahren und die Parametrierung desselben werden somit mittels der Steuereinrichtung, die mit der additiven Fertigungsvorrichtung und einem etwaigen Nachbearbeitungssystem, insbesondere mit deren verschiedenen Einrichtungen, Baugruppen und dergleichen in Kommunikation steht, durchgeführt, umfassend eine geeignete Steuerung und/oder Regelung. Die Steuereinrichtung ist mit den zu steuernden bzw. zu regelnden und/oder auszulesenden Komponenten signaltechnisch verbunden.

Die Kommunikation zwischen der Steuereinrichtung und den zu steuernden bzw. zu regelnden und/oder auszulesenden Komponenten kann drahtgebunden oder drahtlos, digital oder analog erfolgen. Die Steuereinrichtung kann entsprechend Signale (Steuersignale, Daten usw.) empfangen und/oder senden, wobei sowohl ein Signaltransport in einer Richtung als auch in beiden Richtungen in diesem Zusammenhang unter den Begriff "Kommunikation" fällt. Die Steuereinrichtung muss hierbei nicht unbedingt durch eine zentrale Recheneinrichtung oder elektronische Regelung realisiert sein, sondern es sind dezentrale und/oder mehrstufige Systeme, Regelungsnetzwerke, Cloud-Systeme und dergleichen umfasst. Die Steuereinrichtung kann zudem integraler Bestandteil einer übergeordneten Anlagensteuerung sein oder mit einer solchen kommunizieren. Die Steuereinrichtung kann auch mit Anlagensteuerungen unterer Ebenen, d.h. den entsprechenden Einrichtungen zugeordneten Steuerungen kommunizieren.

Vorzugsweise ist die Steuereinrichtung aus den oben genannten Gründen eingerichtet, um das Strahlschmelzsystem zu veranlassen, in dem zumindest einen Konturbereich mehrere nebeneinanderliegende Konturlinien zu erzeugen und Zwischenräume der Konturlinien erneut zu belichten, insbesondere mit gegenüber den Konturlinien veränderten Prozessparametern.

Vorzugsweise ist die Steuereinrichtung aus den oben genannten Gründen eingerichtet, um das Strahlschmelzsystem zu veranlassen, den zumindest einen Hatchbereich unter Anwendung der Kontur-Prozessparameter zu belichten, um entsprechend eine Erweiterung des Konturbereichs und/oder eine Verbesserung der Oberflächengüte des Konturbereichs zu erreichen.

Vorzugsweise ist die Steuereinrichtung in Zusammenarbeit mit einem Schichterzeuger eingerichtet, um eine besonders dünne Bearbeitungsschicht in Kombination mit einem feineren Pulvermaterial im Herstellungsabschnitt der additiven Fertigungsvorrichtung zu erzeugen. Vorzugsweise wird zu diesem Zweck ein Pulvermaterial mit einer Partikelgröße von maximal 20 µm, insbesondere weniger als 15 µm, in Kombination mit einer Schichtdicke der Bearbeitungsschicht von maximal 20 µm, insbesondere weniger als 15 µm, angewendet. Besonders bevorzugt ist die Schichtdicke der Bearbeitungsschicht größer als die Partikelgröße des Pulvermaterials.

Vorzugsweise weist die additive Fertigungsvorrichtung aus den oben genannten Gründen eine Abtragungsvorrichtung, umfassend beispielsweise eine Fräse, auf, wobei die Steuereinrichtung eingerichtet ist, um im Anschluss an die Belichtung der Bearbeitungsschicht eine subtraktive Bearbeitung des Konturbereichs mittels der Abtragungsvorrichtung vorzunehmen.

Die oben genannte Aufgabe wird ferner durch eine Anordnung zur Fertigung eines Bauteils, insbesondere eines Bauteils zur Verwendung mit Lebensmitteln, gelöst, wobei die Anordnung aufweist: ein System zur additiven Fertigung des Bauteils, vorzugsweise nach einem der vorstehend beschriebenen Ausführungsvarianten; und ein Nachbearbeitungssystem zum Nachbearbeiten von Oberflächen des Bauteils mittels eines oder mehrerer Nachbearbeitungsverfahren, umfassend vorzugsweise das Strömungsschleifen und/oder Hirtisieren und/oder MMP und/oder DLyte und/oder HIP.

Die Merkmale, technischen Wirkungen, Vorteile sowie Ausführungsbeispiele, die in Bezug auf die Verfahren und Systeme beschrieben wurden, gelten analog für die Anordnung.

Vorzugsweise ist das Nachbearbeitungssystem aus den oben genannten Gründen eingerichtet, um zumindest zwei Nachbearbeitungsverfahren zu kombinieren, so dass die Nachbearbeitung eine Grobbearbeitung, bei der ein grober Materialabtrag erfolgt, und eine Feinbearbeitung, welche die finale Oberfläche erzeugt, umfasst, wobei das Nachbearbeitungssystem vorzugsweise eingerichtet ist, um Strömungsschleifen und einen MMP-Prozess oder das Hirtisieren oder das DLyte-Verfahren in einer an das zu erreichende Ergebnis angepassten Reihenfolge zu kombinieren.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine vertikale Schnittansicht eines beispielhaften Füllorgans, das zumindest teilweise mittels eines additiven Fertigungsverfahrens herstellbar ist;
- Figur 2: schematisch ein System zur additiven Fertigung eines Bauteils, das zur Verwendung im Lebensmittelbereich geeignet ist;
- Figur 3A: einen schematischen Querschnitt eines Bauteils mit einem Hatchbereich und einer einfachen Kontur;
- Figur 3B: einen schematischen Querschnitt eines Bauteils mit einem Hatchbereich und einem Konturbereich, der mehrere Konturlinien aufweist;
- Figur 3C: einen schematischen Querschnitt eines Bauteils mit einem Hatchbereich und einem mehrfach belichteten Konturbereich, der mehrere Konturlinien aufweist; und
- Figur 4: eine dreidimensionale Darstellung eines additiv gefertigten Ventilabschnitts eines Füllorgans.

Detaillierte Beschreibung bevorzugter Ausführungsbeispiele Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

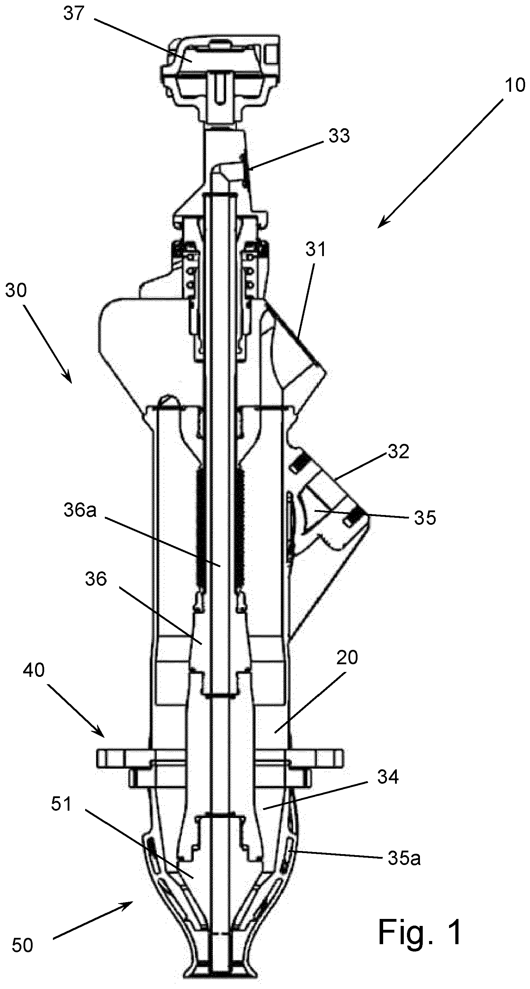

Die Figur 1 zeigt eine vertikale Schnittansicht eines Füllorgans 10. Das Füllorgan 10 dient dem Befüllen eines Behälters (in den Figuren nicht gezeigt) mit einem Füllprodukt, vorzugsweise einem Getränk in einer Getränkeabfüllanlage. Als abzufüllende Füllprodukte kommen beispielsweise Wasser (still oder karbonisiert), Softdrinks, Smoothies, Milchprodukte, Bier, Wein, Mischgetränke und dergleichen in Betracht.

Das Füllorgan 10 weist ein längliches, zylindrisches Gehäuse 20 auf, dessen Haupterstreckung eine Längsrichtung definiert. Die Längsrichtung fällt im eingebauten Zustand normalerweise mit der Schwerkraftrichtung zusammen.

Das Gehäuse 20 kann das Füllorgan 10 in drei Abschnitte, einen oberen Ventilabschnitt 30, einen Flanschabschnitt 40 und einen unteren Ventilabschnitt 50, dies jedoch nur beispielhaft, unterteilen. Diese Dreiteilung des Füllorgans 10 dient im Wesentlichen einer wirtschaftlichen Fertigung. So kann der obere Ventilabschnitt 30 beispielsweise in einem selektiven Laserschmelzverfahren (SLM) oder einem anderen 3D-Druckverfahren hergestellt sowie direkt und nahtlos auf dem Flanschabschnitt 40 additiv oder generativ aufgebaut werden. Der Flanschabschnitt 40 kann mit konventionellen Methoden, beispielsweise Drehen, Fräsen, Laserschneiden und dergleichen, gefertigt und somit besonders wirtschaftlich hergestellt werden. Der untere Abschnitt 50 des Füllorgans 10 wird vorzugsweise ebenfalls mit einem additiven Verfahren von der anderen Seite auf den Flanschabschnitt 40 aufgebracht bzw. aufgedruckt, so dass der Flanschabschnitt 40 als Basis oder Anker für die beidseitigen Aufbauten - den oberen Ventilabschnitt 30 und den unteren Ventilabschnitt 50 - fungieren kann.

Im oberen Ventilabschnitt 30 sind beispielhaft verschiedene Anschlüsse untergebracht, darunter ein erster Produktanschluss 31 und ein zweiter Produktanschluss 32. Die beiden Produktanschlüsse 31, 32 sind zum Anschluss an entsprechende Produktzuleitungen eingerichtet und leiten das Füllprodukt in unterschiedliche Kanäle im Füllorgan 10, wie weiter unten genauer ausgeführt.

Ferner umfasst der obere Ventilabschnitt 30 beispielhaft einen Gasanschluss 33, an den sich ein Gaskanal 36a anschließt. Der Gaskanal 36a dient beispielsweise der Zuleitung eines Vorspanngases in den Behälter und/oder Ableitung von aus dem Behälter während des Befüllens verdrängtem Rückgas.

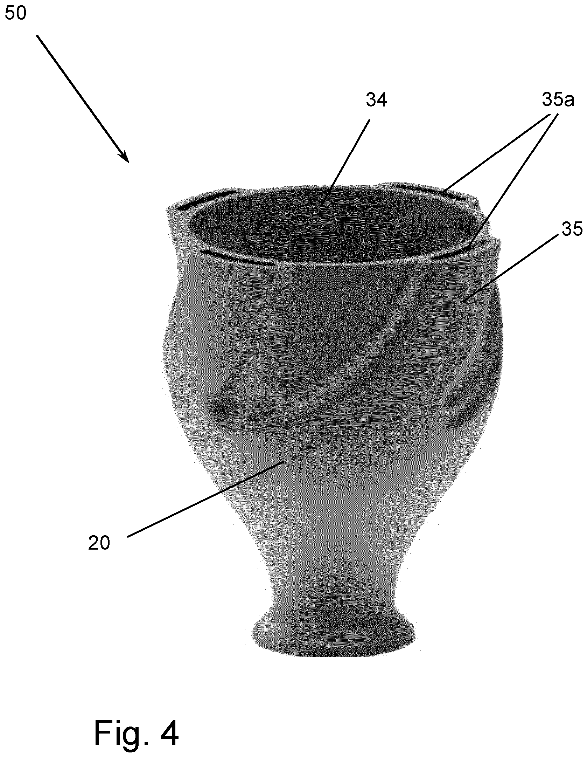

Das Füllorgan 10 umfasst eine erste Produktleitung 34, die mit dem ersten Produktanschluss 31 in Fluidverbindung steht und im vorliegenden Ausführungsbeispiel ein vom Gehäuse 20 eingefasster Produktraum ist. Außerdem ist eine zweite Produktleitung 35 vorgesehen, die mit dem zweiten Produktanschluss 32 in Fluidverbindung steht und sich im vorliegenden Ausführungsbeispiel in mehrere Mantelkanäle 35a (vgl. auch Figur 4) teilt, die im Bereich des Außenumfangs bzw. Zylindermantels des Gehäuses 20 verlaufen.

Die Produktleitungen 34, 35, insbesondere die zweite Produktleitung 35, können Verzweigungen aufweisen. Ferner kann deren Gestaltung (Krümmung, Verlauf, Durchmesser, Querschnitt usw.) im Hinblick auf die gewünschten Abfüllmodi, insbesondere Freistrahlabfüllen und Wandabfüllen, optimiert sein. Ein Fluidaustausch zwischen der ersten und der zweiten Produktleitung 34, 35 innerhalb des Füllorgans 10 ist in der Regel nicht vorgesehen, jedoch nicht prinzipiell ausgeschlossen.

Der obere Ventilabschnitt 30 weist ferner eine Ventilstange 36 auf, die sich zentral und in Längsrichtung durch das Gehäuse 20 erstreckt. Die Ventilstange 36 ist am oberen Ende an einen Aktuator 37 angebunden, der eingerichtet ist, um die Ventilstange 36 und damit einen am unteren Ende befindlichen Ventilkegel 51 zu heben und zu senken. Die Ventilstange 36 umfasst den Gaskanal 36a, der sich vorzugsweise als Bohrung zentral darin und in Längsrichtung erstreckt.

Das beschriebene Kombifüllventil vereinigt zwei Füllprozesse, insbesondere eine Freistrahlabfüllung, geeignet besonders für stille Füllprodukte, und eine Wandabfüllung, geeignet besonders für karbonisierte Füllprodukte, in einem einzigen Füllorgan 10, ohne den jeweilig anderen Füllprozess qualitativ zu verschlechtern. Die produktberührte Kontur im Innern des Füllorgans 10, umfassend die erste Produktleitung 34 und den Ventilkegel 51, erlaubt die Erzeugung eines ersten Füllstrahls, insbesondere eines Freistrahls, mit dem das Füllprodukt in den Behälter eingeleitet wird. Die produktberührte Kontur im Mantelbereich des Füllorgans 10, umfassend die zweite Produktleitung 35, erlaubt die Erzeugung eines zweiten Füllstrahls, insbesondere eines rotierenden Füllstrahls für die Wandabfüllung, mit dem das Füllprodukt in den Behälter eingeleitet wird.

Das Füllorgan 10 ist zumindest abschnittsweise mittels eines additiven Fertigungsverfahrens herstellbar. Das additive Fertigungsverfahren ist aufgrund der Komplexität der beschriebenen Kanalgeometrien nützlich, da eine Gesamtherstellung des Füllorgans 10 mit konventionellen Methoden nicht oder nur mit hohem Aufwand möglich ist. Die Kanäle können strömungstechnisch optimal ausgelegt werden, und es besteht eine maximale Gestaltungsfreiheit zur Umsetzung konventionell schwer realisierbarer Geometrien. Zudem lässt sich durch die additive Fertigung eine Materialersparnis erzielen, da im Unterschied zu einem subtraktiven Fertigungsverfahren im Wesentlichen nur benötigtes Material eingesetzt wird.

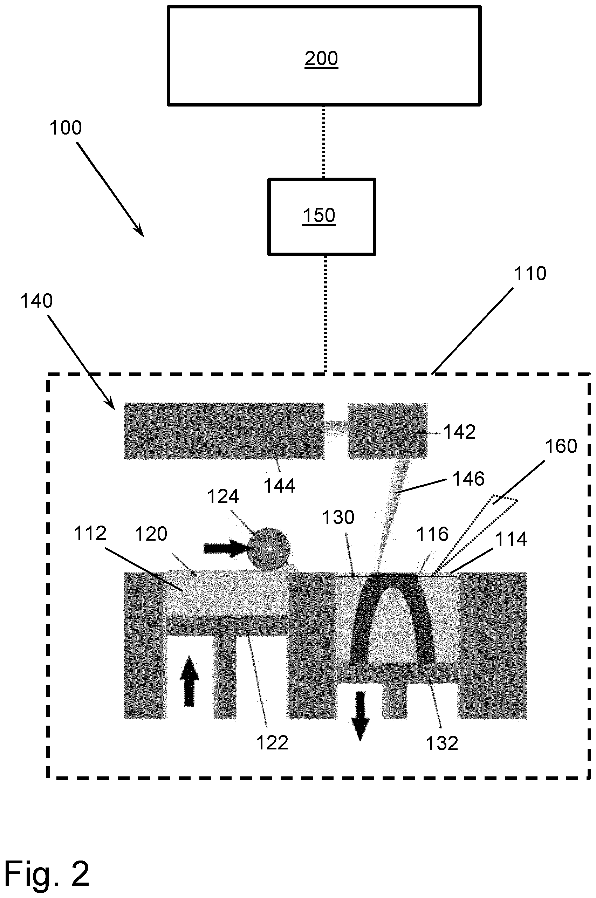

Zur zumindest abschnittsweisen additiven Fertigung des Füllorgans 10, insbesondere des oberen Ventilabschnitts 30 und/oder des unteren Ventilabschnitts 50, wird ein System 100 herangezogen, das eine additive Fertigungsvorrichtung 110 und eine Steuereinrichtung 150 aufweist. Die Figur 2 zeigt schematisch ein solches System 100 zur additiven Fertigung eines Bauteils 116, insbesondere eines Füllorgans 10 zumindest abschnittsweise. Das hierin beschriebene System 100 beruht auf dem Prinzip "Selective Laser Melting" (SLM). Allerdings kann das System 100 auch eine andere additive Fertigungstechnik realisieren, beispielsweise "Electron Beam Melting", "Laser Engineering Net Shape", "Metal Powder Application", "Wire Arc Additive Manufacturing", "Fused Deposition Modeling", "Binder Jetting" oder "Nano Particle Jetting".

Die hierin beispielhaft gezeigte additive Fertigungsvorrichtung 110 weist einen Pulverzufuhrabschnitt 120 und einen Herstellungsabschnitt 130 auf.

Der Pulverzufuhrabschnitt 120 ist eingerichtet, um Pulvermaterial 112 schichtweise in den Herstellungsabschnitt zu überführen. Zu diesem Zweck umfasst der Pulverzufuhrabschnitt 120 eine Pulverhubeinheit 122, auf der das Pulvermaterial 112 gelagert ist und die gemeinsam mit dem Pulvermaterial 112 gehoben und abgesenkt werden kann. Die Pulverhubeinheit 122 kann kolbenförmig ausgebildet sein, wie in der Figur 2 gezeigt.

Die additive Fertigungsvorrichtung 110 weist ferner einen Schichterzeuger 124 auf, der eingerichtet ist, um vom Pulvermaterial 112 des Pulverzufuhrabschnitts 120 eine gewisse Menge in den Herstellungsabschnitt 130 zu transferieren und dort eine Bearbeitungsschicht 114 von Pulvermaterial 112 zu erzeugen. Dies kann dadurch erfolgen, dass der Schichterzeuger 124 eine obere Schicht von Pulvermaterial 112 im Pulverzufuhrabschnitt 120 abnimmt und in den Herstellungsabschnitt 130 verschiebt. Der Schichterzeuger 124 kann, wie in der vorliegenden Ausführungsform, als Kugel oder alternativ als Schaber ausgebildet sein.

Somit wird das Pulvermaterial 112 schichtweise auf eine Grundplatte 132 des Herstellungsabschnitts 130 aufgetragen. Die Grundplatte 132 kann wie die Pulverhubeinheit 122 gemeinsam mit dem dann zumindest teilweise verarbeiteten Pulvermaterial 112 gehoben und abgesenkt werden, so dass die aktuelle Bearbeitungsschicht 114 stets einen konstanten Abstand zu einem Scanner 142 eines Strahlschmelzsystems 140 aufweist.

Das Strahlschmelzsystem 140 weist neben dem Scanner 142 einen Laser 144 auf, die so eingerichtet sind, dass ein Laserstrahl 146 das Pulvermaterial 112 in der Bearbeitungsschicht 114 des Herstellungsabschnitts 130 lokal aufschmilzt, wodurch das Material mit der darunterliegenden Schicht verschweißt wird. Anschließend wird die Grundplatte 132 um eine Schichtdicke abgesenkt, und eine neue Bearbeitungsschicht 114 wird mittels des Schichterzeugers 124 im Herstellungsabschnitt 130 aufgetragen. Anschließend führt das Strahlschmelzsystem 140 einen erneuten Belichtungsvorgang aus. Auf diese Weise wird das additiv herzustellende Bauteil 116 Schicht für Schicht aufgebaut.

Als Werkstoff für das Pulvermaterial 112 kommen verschiedene Metalle in Betracht, insbesondere Edelstahl, vorzugsweise Edelstahl 316L, wobei andere Metalle und Legierungen möglich sind, wie etwa Titan oder Aluminium. Der Werkstoff wird in Pulverform in einer dünnen Bearbeitungsschicht 114 von vorzugsweise 10 bis 100 µm Dicke auf die Grundplatte 132 aufgetragen.

Das vorstehend beschriebene Strahlschmelzverfahren wird durch verschiedene Prozessparameter konfiguriert, umfassend beispielsweise Laserleistung, Scangeschwindigkeit und Spurabstand des Strahlschmelzsystems 140 und die vom Schichterzeuger 124 hergestellte Schichtdicke der Bearbeitungsschicht 114.

Üblich ist eine Scanstrategie, bei der das Strahlschmelzsystem 140 die Bearbeitungsschicht 114 bzw. das additiv herzustellende Bauteil 116 so abfährt, dass ein sogenannter "Hatch", hierin als Hatchbereich 117 bezeichnet, und ein Konturbereich 118 entstehen.

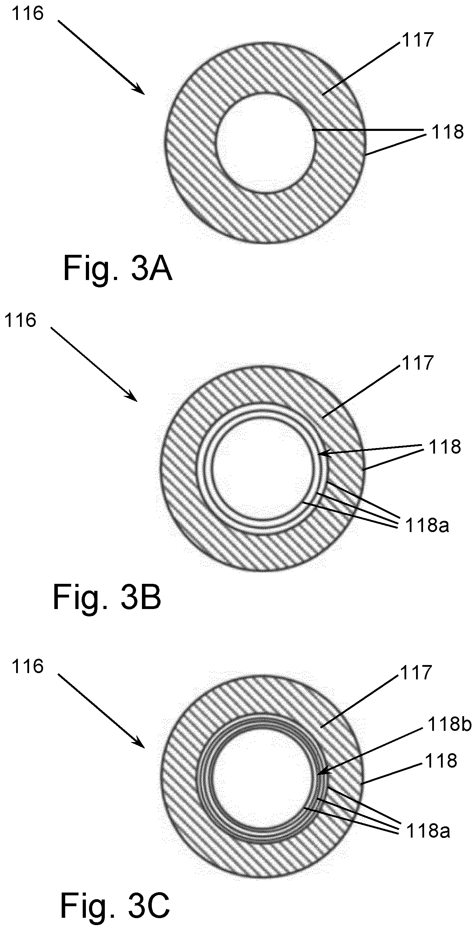

Die Figur 3A zeigt einen schematischen Querschnitt eines beispielhaften Bauteils 116 mit einem Hatchbereich 117 und einem Konturbereich 118, der eine einfache Kontur, d.h. je eine einzige Konturlinie aufweist. Hatchbereich 117 und Konturbereich 118 werden für einen guten Kompromiss aus Wirtschaftlichkeit und Qualität üblicherweise mit unterschiedlichen Prozessparametern ausgeführt, wobei der Hatchbereich 117 vorzugsweise schneller, d.h. mit einer höheren Scangeschwindigkeit, als der Konturbereich 118 gescannt bzw. belichtet wird. Allerdings können alternative oder zusätzliche Prozessparameter, beispielsweise Laserleistung oder Spurabstand, modifiziert werden, um den Konturbereich 118 vom Hatchbereich 117 prozesstechnisch zu unterscheiden. Die für den Hatchbereich 117 angewendeten Prozessparameter seien hierin als "Hatch-Prozessparameter" bezeichnet, und die für den Konturbereich 118 angewendeten Prozessparameter seien als "Kontur-Prozessparameter" bezeichnet.

Das System 100 umfasst ferner ein Nachbearbeitungssystem 200, das eingerichtet ist, um das in der Fertigungsvorrichtung 110 additiv gefertigte Bauteil 116 nachzubearbeiten, so dass das Bauteil 116 für die Verwendung im Lebensmittelbereich besser geeignet ist. Insbesondere wird angestrebt, dass produktberührte Flächen, wie etwa die Innenwandungen der Produktleitungen 34, 35 des Füllorgans 10, eine Rauheit von Ra ≤ 0,8 µm aufweisen. Das Nachbearbeitungssystem 200 kann auf einer herkömmlichen Technologie (Strömungsschleifen, Hirtisieren, MMP, DLyte, HIP usw.) beruhen.

Das Strahlschmelzverfahren und die Parametrierung desselben werden mittels der Steuereinrichtung 150 durchgeführt, die mit der additiven Fertigungsvorrichtung 110 und dem Nachbearbeitungssystem 200, insbesondere mit deren verschiedenen Einrichtungen, Baugruppen und dergleichen in Kommunikation steht. Die Steuereinrichtung 150 ist mit den zu steuernden bzw. zu regelnden und/oder auszulesenden Komponenten signaltechnisch verbunden, somit insbesondere mit dem Pulverzufuhrabschnitt 120, dem Schichterzeuger 124, dem Herstellungsabschnitt 130 und dem Strahlschmelzsystem 140 sowie gegebenenfalls dem Nachbearbeitungssystem 200.

Die Kommunikation zwischen der Steuereinrichtung 150 und den zu steuernden bzw. zu regelnden und/oder auszulesenden Komponenten kann drahtgebunden oder drahtlos, digital oder analog erfolgen. Die Steuereinrichtung 150 kann entsprechend Signale (Steuersignale, Daten usw.) empfangen und/oder senden, wobei sowohl ein Signaltransport in einer Richtung als auch in beiden Richtungen in diesem Zusammenhang unter den Begriff "Kommunikation" fällt. Die Steuereinrichtung 150 muss hierbei nicht unbedingt durch eine zentrale Recheneinrichtung oder elektronische Regelung realisiert sein, sondern es sind dezentrale und/oder mehrstufige Systeme, Regelungsnetzwerke, Cloud-Systeme und dergleichen umfasst. Die Steuereinrichtung 150 kann zudem integraler Bestandteil einer übergeordneten Anlagensteuerung sein oder mit einer solchen kommunizieren. Die Steuereinrichtung 150 kann auch mit Anlagensteuerungen unterer Ebenen, d.h. den entsprechenden Einrichtungen zugeordneten Steuerungen kommunizieren.

Um Oberflächen mit hoher Güte und Homogenität der produktberührten Abschnitte des Bauteils 116 zu erzielen, können verschiedene Maßnahmen einzeln oder in Kombination umgesetzt werden, die nachfolgenden beschrieben sind:
Gemäß dem Ausführungsbeispiel der Figur 3B werden alle oder ausgewählte Konturbereiche 118 mit mehreren, nebeneinanderliegenden Konturlinien 118a gescannt. In anderen Worten, die Steuereinrichtung 150 setzt die Kontur-Prozessparameter für den Konturbereich 118, so dass mehrere Konturlinien 118a erzeugt werden.

Eine Alternative der additiven Fertigung besteht darin, dass der Konturbereich 118 mehrfach belichtet wird, wodurch dieser mit höherer Qualität gefertigt wird. Die Figur 3C zeigt als weiteres Ausführungsbeispiel einen Konturbereich 118b, der aus einer Kombination aus der Herstellung mehrerer Konturlinien 118a und einer Mehrfachbelichtung gefertigt ist. Durch die Mehrfachbelichtung der Konturlinien 118a, insbesondere von Konturlinienzwischenbereichen, werden die entsprechenden Abschnitte mit angepasster Parametrierung erneut belichtet. Dadurch werden diese Bereiche erneut aufgeschmolzen, wodurch eine qualitativ höherwertigere Verbindung im Gefüge realisierbar ist.

Auf diese Weise wird der unstetige Übergangsbereich zwischen Hatchbereich 117 und Konturbereich 118 ins Bauteilinnere verschoben, wodurch bei der Nachbearbeitung des Bauteils 116 die Gefahr beseitigt wird, dass der Konturbereich 118 abschnittsweise komplett beseitigt wird und der Hatchbereich 117 mit üblicherweise geringerer Qualität als produktberührte Fläche freiliegt. Ferner werden Bindungsfehler in den Zwischenbereichen durch eine etwaige Mehrfachbelichtung eliminiert. Insgesamt ist damit eine Reduktion der Porenanzahl und -größe im randnahen Bereich, d.h. in den produktberührten Flächen des Bauteils 116 realisierbar.

Eine Weiterführung des obigen Konzepts beruht darauf, dass auf eine Unterscheidung zwischen Hatchbereich 117 und Konturbereich 118 verzichtet wird. Das Bauteil 116 wird in diesem Fall ohne Konturbereich 118 gedruckt, wobei die Steuereinrichtung 150 den Hatchbereich 117 mit den Kontur-Prozessparametern fertigt. Die Steuereinrichtung 150 kann hier auch eine Maschinensteuerung sein. Auf diese Weise wird ein etwaiges erhöhtes Porenaufkommen im Übergangsbereich zwischen Hatchbereich 117 und Konturbereich 118 eliminiert, wodurch ein im Wesentlichen porenfreies oberflächennahes Gefüge generierbar ist.

Eine alternative oder zusätzliche Maßnahme zur Verbesserung der Oberflächengüte produktberührter Flächen des Bauteils 116 liegt in der Verwendung einer dünneren Schichtdicke der Bearbeitungsschicht 114 in Kombination mit einem feineren Pulvermaterial 112. Während herkömmlich ein Pulvermaterial mit einer Partikelgrößenverteilung von ca. 25 bis 45 µm bei einer Bearbeitungsschichtdicke von ca. 50 µm verwendet wird, kann durch Anwendung eines feineren Pulvermaterials 112 mit einer Partikelgröße von max. 20 µm, vorzugsweise weniger als 15 µm, in Kombination mit einer Schichtdicke von max. 20 µm, vorzugsweise weniger als 15 µm, die Oberflächenrauheit weiter reduziert werden. Besonders bevorzugt entspricht die Schichtdicke der Bearbeitungsschicht 114 im Wesentlichen genau der Partikelgröße des Pulvermaterials 112, so dass durch den Schichterzeuger 124 eine Bearbeitungsschicht 114 mit einer Dicke von einem Partikel erzeugt wird.

Eine alternative oder zusätzliche Maßnahme zur Verbesserung der Oberflächengüte produktberührter Flächen des Bauteils 116 liegt in der Kombination unterschiedlicher Nachbearbeitungsverfahren. So umfasst die Nachbearbeitung vorzugsweise eine Grobbearbeitung, bei der ein grober Materialabtrag erfolgt, und eine Feinbearbeitung, welche die finale Oberfläche erzeugt. Zu diesem Zweck können das Strömungsschleifen und ein MMP-Prozess oder das Hirtisieren oder das DLyte-Verfahren in einer an das zu erreichende Ergebnis angepassten Reihenfolge kombiniert werden.

Alternativ kann das additive Fertigungsverfahren auf einem Hybridverfahren beruhen, bei dem ein schichtweiser additiver Aufbau, beispielsweise mittels der additiven Fertigungsvorrichtung 110, und eine sequenziell nachgeschaltete subtraktive Nachbearbeitung kombiniert werden. So kann das System 100 eine Abtragungsvorrichtung 160, beispielsweise in Form einer Fräse, umfassen, die eingerichtet ist, um nach dem Belichten einer oder mehrerer Bearbeitungsschichten 114 durch das Strahlschmelzsystem 140 die Geometrie des Bauteils 116 in der aktuellen Bearbeitungsstufe abrasiv zu bearbeiten. In anderen Worten, nach einer individuell definierten Anzahl an additiv aufgebauten Schichten in der additiven Fertigungsvorrichtung 110 erfolgt ein Werkzeugwechsel hin zur Abtragungsvorrichtung 160, vorzugsweise zu einem Fräskopf. Dieser bearbeitet dann die bis dahin erzeugte Geometrie mechanisch nach. Dieser Prozess wird so lange iteriert, bis das Bauteil 116 vollständig aufgebaut ist.

Durch Kombination eines solchen Hybridverfahrens mit einer Nachbearbeitung können Pulverrückstände, Schweißspritzer und Werkzeugwechselkanten beseitigt bzw. homogenisiert werden, wobei vorzugsweise ein hybrides DED-Verfahren oder ein hybrides SLM-Verfahren mit dem Strömungsschleifen oder Hirtisieren kombiniert werden.

Beim Hybridverfahren können durch die subtraktive Bearbeitung während der additiven Fertigung Kanten oder andere Oberflächenfehler am Bauteil 116 entstehen. Diese können durch eine Optimierung der Schneidengeometrie der Abtragungsvorrichtung 160 minimiert werden, beispielsweise durch Verwendung einer Schneide mit abgerundeten Kanten anstelle einer spitzen Schneide. Alternativ oder zusätzlich kann eine simulationsgestützte Verzugskompensation durchgeführt werden, um Verzügen entgegenzuwirken, die beispielsweise durch thermisch induzierte Eigenspannungen während des additiven Aufbauprozesses sowie durch das Lösen von Eigenspannungen bei der subtraktiven Nachbearbeitung hervorgerufen werden.

Generell können additiv gefertigte Bauteile 116, die mit direktem oder sekundärem Lebensmittelkontakt in Abfüll- oder Verpackungsanlagen zum Einsatz kommen, durch das Verfahren und das System 100 in den oben dargelegten Ausführungsvarianten so bearbeitet werden, dass sie den hygienischen Anforderungen im Lebensmittelbereich genügen. Dazu zählen insbesondere Komponenten von Füllorganen 10, vorzugsweise Gehäuseteile mit Produktleitungen 34, 35 bzw. Kanälen komplexer Geometrien.

Die Figur 4 ist eine dreidimensionale Darstellung des unteren Ventilabschnitts 50 des Füllorgans 10, vgl. Figur 1. Der untere Ventilabschnitt 50 umfasst die oben genannten Produktleitungen 34, 35, wobei die zweite Produktleitung 35 in Form mehrerer Mantelkanäle 35a ausgebildet ist. Die Mantelkanäle 35a sind im Gehäuse 20 bzw. dessen Wandung integriert und verlaufen spiralförmig nach unten zum Auslass bzw. Mündungsabschnitt des Ventilabschnitts 50, wodurch die Mantelkanäle 35a einen Drallabschnitt ausbilden, um das Füllprodukt beim Austritt aus dem Ventilabschnitts 50 in Rotation zu versetzen.

Der untere Ventilabschnitt 50 ist aufgrund seiner vergleichsweise komplexen Kanalstruktur für das hierin dargelegte additive Fertigungskonzept besonders geeignet. Allerdings ist das Fertigungskonzept darauf nicht beschränkt. Weitere additiv gefertigte Komponenten im Bereich der Lebensmittelverarbeitung können sein: Drallkörper, Ventilstangen Ventilkegel und sonstige Ventilverschlüsse, Dosageventile, Ventilblöcke, Schaltventile in der Fülltechnik, Wasseraufbereitung und Blasmaschinen, Formschalen und Bodentassen in der Streckblastechnik, Reckstangen mit innenliegenden Prozessluftkanälen, Komponenten für Flascheninnenbeschichtung (z.B. Elektroden), Filter und Siebe, Rührwerke sowie Misch- und Dispergiergeräte, ggf. mit integrierten Kanälen bzw. Leitschaufeln, sonstige fluidführende Komponenten wie Düsen, Kanäle, Leitungen und Rohre welche der Förderung, Durchmischung und Verteilung von flüssigen Lebensmitteln oder Fluiden mit direktem und/oder sekundärem Produktkontakt dienen.

Die hierin dargelegte additive Fertigung erlaubt eine sehr hohe Gestaltungsfreiheit zur Umsetzung komplexer Geometrien, die konventionell nicht oder nur mit sehr hohem Aufwand realisierbar sind. Insbesondere können Dichtstellen und Toträume aufgrund konstruktiver Restriktionen, die durch konventionelle Fertigungstechniken nicht immer vermeidbar sind, eliminiert oder vermindert werden. Hierzu trägt auch eine Funktionsintegration bei, durch Vermeidung von Dichtstellen etwa durch Bauteilreduktion. Die gestalterische Freiheit der additiven Fertigung lässt sich zudem zur Verbesserung hygienischer Eigenschaften des Bauteils 116 nutzen, beispielsweise durch eine strömungsoptimierte Konstruktion.

Die additive Fertigung trägt zur Materialersparnis bei, da etwaige subtraktive Prozesse nur für die Nachbearbeitung verwendet werden, somit kaum ins Gewicht fallen, wodurch im Wesentlichen nur für das Bauteil 116 benötigtes Material verwendet wird.

Durch eine gezielte Anpassung der Prozessparameter wie Laserleistung, Lasergeschwindigkeit, Hatchabstand, Schichtdicke und Korngrößenverteilung des Pulvers (feineres Pulver) kann die Bauteilqualität signifikant verbessert werden. Die Verbesserung kann hierbei eine Reduzierung der Porosität (Anzahl und Größe der Poren) im Bauteil 116 umfassen. Durch eine etwaige nachgeschaltete abrasive Nachbearbeitung werden keine Poren mehr freigelegt, wodurch insgesamt eine Reduktion der Oberflächenrauheit realisierbar ist. Die dadurch erzielbare verbesserte As-built-Oberflächengüte, sofern sie den hygienischen Anforderungen noch nicht entspricht, stellt zumindest eine für die Nachbearbeitung verbesserte Ausgangsrauheit dar.

Somit lassen sich hygienische, innenliegende Oberflächen mit einer Rauheit von Ra ≤ 0,8 µm realisieren, sogar Hochglanzoberflächen, insbesondere unter Anwendung des MMP-Verfahrens, von Ra < 0,2 µm. Damit werden die Gefahr mikrobieller Verunreinigungen des Bauteils 116 reduziert und die Reinigbarkeit verbessert.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Füllorgan
- 20: Gehäuse
- 30: Oberer Ventilabschnitt
- 31: Erster Produktanschluss
- 32: Zweiter Produktanschluss
- 33: Gasanschluss
- 34: Erste Produktleitung
- 35: Zweite Produktleitung
- 35a: Mantelkanal
- 36: Ventilstange
- 37: Aktuator
- 36a: Gaskanal
- 40: Flanschabschnitt
- 50: Unterer Ventilabschnitt
- 51: Ventilkegel

- 100: System zur additiven Fertigung eines Bauteils
- 110: Additive Fertigungsvorrichtung
- 112: Pulvermaterial
- 114: Bearbeitungsschicht
- 116: Additiv gefertigtes Bauteil
- 117: Hatchbereich
- 118: Konturbereich
- 118a: Konturlinie
- 118b: Konturbereich mit mehreren Konturlinien und Mehrfachbelichtung
- 120: Pulverzufuhrabschnitt
- 122: Pulverhubeinheit
- 124: Schichterzeuger
- 130: Herstellungsabschnitt
- 132: Grundplatte
- 140: Strahlschmelzsystem
- 142: Scanner
- 144: Laser
- 146: Laserstrahl
- 150: Steuereinrichtung
- 160: Abtragungsvorrichtung
- 200: Nachbearbeitungssystem

## Patentansprüche

1. Verfahren zur additiven Fertigung eines Bauteils (116), insbesondere eines Bauteils (116) zur Verwendung mit Lebensmitteln, mittels einer additiven Fertigungsvorrichtung (110), die einen Herstellungsabschnitt (130) und ein Strahlschmelzsystem (140) aufweist, wobei das Verfahren aufweist:
Herstellen einer Bearbeitungsschicht (114) aus einem Pulvermaterial (112), das vorzugsweise ein metallisches Pulver ist, in dem Herstellungsabschnitt (130) der additiven Fertigungsvorrichtung (110);
Belichten der Bearbeitungsschicht (114) mittels des Strahlschmelzsystems (140), wodurch das Pulvermaterial (112) in der Bearbeitungsschicht (114) lokal aufgeschmolzen wird, wobei das Strahlschmelzsystem (140) die Bearbeitungsschicht (114) hierbei so abfährt und belichtet, dass unter Anwendung von Hatch-Prozessparametern zumindest ein Hatchbereich (117) und unter Anwendung von Kontur-Prozessparametern zumindest ein Konturbereich (118) des additiv zu fertigenden Bauteils (116) ausgebildet werden, wobei sich die Hatch-Prozessparameter und Kontur-Prozessparameter vorzugsweise zumindest teilweise unterscheiden; wobei
in dem zumindest einen Konturbereich (118) mehrere nebeneinanderliegende Konturlinien (118a) erzeugt werden und/oder der zumindest eine Konturbereich (118) zumindest teilweise mehrfach belichtet wird.

2. Verfahren nach Anspruch 1, **dadurch gekennzeichnet, dass** in dem zumindest einen Konturbereich (118) mehrere nebeneinanderliegende Konturlinien (118a) erzeugt werden und Zwischenräume der Konturlinien (118a) erneut belichtet werden, vorzugsweise mit gegenüber den Konturlinien (118a) veränderten Prozessparametern und/oder ein Überlapp der Konturlinien (118a) erzeugt wird.

3. Verfahren nach Anspruch 1 oder 2, **dadurch gekennzeichnet, dass** der zumindest eine Hatchbereich (117) unter Anwendung der Kontur-Prozessparameter belichtet wird.

4. Verfahren nach einem der vorigen Ansprüche, **dadurch gekennzeichnet, dass** als Pulvermaterial (112) ein feines Pulver mit einer Partikelgröße von maximal 20 µm, vorzugsweise weniger als 15 µm, in Kombination mit einer Schichtdicke der Bearbeitungsschicht (114) von maximal 20 µm, vorzugsweise weniger als 15 µm, angewendet wird, wobei die Schichtdicke der Bearbeitungsschicht (114) vorzugsweise größer als die Partikelgröße des Pulvermaterials (112) ist.

5. Verfahren zur additiven Fertigung eines Bauteils (116), insbesondere eines Bauteils (116) zur Verwendung mit Lebensmitteln, mittels einer additiven Fertigungsvorrichtung (110), die einen Herstellungsabschnitt (130) und ein Strahlschmelzsystem (140) aufweist, wobei das Verfahren aufweist:
Herstellen einer Bearbeitungsschicht (114) aus einem Pulvermaterial (112) in dem Herstellungsabschnitt (130) der additiven Fertigungsvorrichtung (110);
Belichten der Bearbeitungsschicht (114) mittels des Strahlschmelzsystems (140), wodurch das Pulvermaterial (112) in der Bearbeitungsschicht (114) lokal aufgeschmolzen wird; wobei
als Pulvermaterial (112) ein feines Pulver mit einer Partikelgröße von maximal 20 µm, vorzugsweise weniger als 15 µm, in Kombination mit einer Schichtdicke der Bearbeitungsschicht (114) von maximal 20 µm, vorzugsweise weniger als 15 µm, angewendet wird, wobei die Schichtdicke der Bearbeitungsschicht (114) vorzugsweise größer als die Partikelgröße des Pulvermaterials (112) ist.

6. Verfahren nach einem der vorigen Ansprüche, **dadurch gekennzeichnet, dass** die Schritte des Herstellens und Belichtens der Bearbeitungsschicht (114) in einem sequentiellen Prozess mehrfach durchgeführt werden, wodurch das additiv herzustellende Bauteil (116) Schicht für Schicht aufgebaut wird.

7. Verfahren nach einem der vorigen Ansprüche, **dadurch gekennzeichnet, dass** im Anschluss an die Belichtung der Bearbeitungsschicht (114) eine subtraktive Bearbeitung des Konturbereichs (118) mittels einer Abtragungsvorrichtung (160), umfassend vorzugsweise eine Fräse, erfolgt.

8. Verfahren zur Fertigung eines Bauteils (116), insbesondere eines Bauteils (116) zur Verwendung mit Lebensmitteln, wobei das Verfahren aufweist:
additives Fertigen des Bauteils (116) mittels einer additiven Fertigungsvorrichtung (110), vorzugsweise nach einem der Ansprüche 1 bis 7; und
Nachbearbeiten zumindest einer Oberfläche des Bauteils (116) mittels eines oder mehrerer Nachbearbeitungsverfahren, umfassend vorzugsweise Strömungsschleifen und/oder Hirtisieren und/oder MMP und/oder DLyte und/oder HIP.

9. Verfahren nach Anspruch 8, **dadurch gekennzeichnet, dass** zumindest zwei Nachbearbeitungsverfahren kombiniert werden, so dass die Nachbearbeitung eine Grobbearbeitung, bei der ein grober Materialabtrag erfolgt, und eine Feinbearbeitung, welche die finale Oberfläche erzeugt, umfasst, wobei vorzugsweise das Strömungsschleifen und ein MMP-Prozess oder das Hirtisieren oder das DLyte-Verfahren in einer an das zu erreichende Ergebnis angepassten Reihenfolge kombiniert werden.

10. System (100) zur additiven Fertigung eines Bauteils (116), insbesondere eines Bauteils (116) zur Verwendung mit Lebensmitteln, wobei das System (100) aufweist:
eine additive Fertigungsvorrichtung (110), umfassend einen Herstellungsabschnitt (130) zum Herstellen einer Bearbeitungsschicht (114) aus einem Pulvermaterial (112), das vorzugsweise ein metallisches Pulver ist, und ein Strahlschmelzsystem (140) zum Belichten der Bearbeitungsschicht (114), wodurch das Pulvermaterial (112) in der Bearbeitungsschicht (114) lokal aufschmelzbar ist; und
eine Steuereinrichtung (150), die mit der additiven Fertigungsvorrichtung (110) in Kommunikation steht und eingerichtet ist, um das Strahlschmelzsystem (140) zu veranlassen, die Bearbeitungsschicht (114) so abzufahren und zu belichten, dass unter Anwendung von Hatch-Prozessparametern zumindest ein Hatchbereich (117) und unter Anwendung von Kontur-Prozessparametern zumindest ein Konturbereich (118) des additiv zu fertigenden Bauteils (116) ausgebildet werden, wobei sich die Hatch-Prozessparameter und Kontur-Prozessparameter vorzugsweise zumindest teilweise unterscheiden; wobei
die Steuereinrichtung (150) eingerichtet ist, um das Strahlschmelzsystem (140) zu veranlassen, in dem zumindest einen Konturbereich (118) mehrere nebeneinanderliegende Konturlinien (118a) zu erzeugen und/oder den zumindest einen Konturbereich (118) zumindest teilweise mehrfach zu belichten.

11. System (100) nach Anspruch 10, **dadurch gekennzeichnet, dass** die Steuereinrichtung (150) eingerichtet ist, um das Strahlschmelzsystem (140) zu veranlassen, in dem zumindest einen Konturbereich (118) mehrere nebeneinanderliegende Konturlinien (118a) zu erzeugen und Zwischenräume der Konturlinien (118a) erneut zu belichten, vorzugsweise mit gegenüber den Konturlinien (118a) veränderten Prozessparametern und/oder mit einem Überlapp der Konturlinien (118a).

12. System (100) nach Anspruch 10 oder 11, **dadurch gekennzeichnet, dass** die Steuereinrichtung (150) eingerichtet ist, um das Strahlschmelzsystem (140) zu veranlassen, den zumindest eine Hatchbereich (117) unter Anwendung der Kontur-Prozessparameter zu belichten.

13. System (100) nach einem der Ansprüche 10 bis 12, **dadurch gekennzeichnet, dass** die additive Fertigungsvorrichtung (110) eine Abtragungsvorrichtung (160), umfassend vorzugsweise eine Fräse, aufweist, wobei die Steuereinrichtung (150) eingerichtet ist, um im Anschluss an die Belichtung der Bearbeitungsschicht (114) eine subtraktive Bearbeitung des Konturbereichs (118) mittels der Abtragungsvorrichtung (160) vorzunehmen.

14. Anordnung zur Fertigung eines Bauteils (116), insbesondere eines Bauteils (116) zur Verwendung mit Lebensmitteln, wobei die Anordnung aufweist:
ein System (100) zur additiven Fertigung des Bauteils (116), vorzugsweise nach einem der Ansprüche 10 bis 13; und
ein Nachbearbeitungssystem (200) zum Nachbearbeiten zumindest einer Oberfläche des Bauteils (116) mittels eines oder mehrerer Nachbearbeitungsverfahren, umfassend vorzugsweise Strömungsschleifen und/oder Hirtisieren und/oder MMP und/oder DLyte und/oder HIP.

15. Anordnung nach Anspruch 14, **dadurch gekennzeichnet, dass** das Nachbearbeitungssystem (200) eingerichtet ist, um zumindest zwei Nachbearbeitungsverfahren zu kombinieren, so dass die Nachbearbeitung eine Grobbearbeitung, bei der ein grober Materialabtrag erfolgt, und eine Feinbearbeitung, welche die finale Oberfläche erzeugt, umfasst, wobei das Nachbearbeitungssystem (200) vorzugsweise eingerichtet ist, um das Strömungsschleifen und einen MMP-Prozess oder das Hirtisieren oder das DLyte-Verfahren in einer an das zu erreichende Ergebnis angepassten Reihenfolge zu kombinieren.
